# EUROPÄISCHE PATENTSCHRIFT

(11) **EP 0 645 281 B1**
(45) Veröffentlichungstag und Bekanntmachung des Hinweises auf die Patenterteilung: **20.11.1996**
(21) Anmeldenummer: 94110516.5
(22) Anmeldetag: 06.07.1994
(51) Int. Cl.: B60R 9/04

(54) **Stützfuss für ein Relingrohr einer auf einem Kraftfahrzeug anzuordnenden Dachreling**
Stanchion for a vehicle roof rack rail
Pied de support d'un profilé de galerie de toit de véhicule

(30) Priorität: 24.09.1993 DE 4332523
(43) Veröffentlichungstag der Anmeldung: 29.03.1995
(73) Patentinhaber: Happich Fahrzeug-Dachsysteme GmbH, D-42285 Wuppertal (DE)
(72) Erfinder: Kolodziej, Klaus, D-42327 Wuppertal (DE); Grätz, Ronald, D-45276 Essen (DE)

(56) Entgegenhaltungen:
- DE-A- 1 900 793
- DE-A- 3 123 106
- DE-U- 8 136 803
- US-A- 5 069 377

## Beschreibung

Die Erfindung bezieht sich auf einen Stützfuß für ein Relingrohr gemäß dem Oberbegriff des Anspruchs 1.

Üblicherweise besteht eine Dachreling (vgl auch DE-OS 35 24 558) aus mindestens einem Relingrohr an jeder Dachlangsseite und mindestens zwei jeweils ein Relingrohr tragenden Stützfüßen. Zur Montage werden die Relingrohre und Stützfüße zusammengesteckt, und die Stützfüße werden mit Gewindebolzen bestückt, deren überstehenden Enden durch Bohrungen im Dachblech hindurchgeführt werden. Auf die Gewindebolzen werden von der anderen Seite des Dachblechs her Schraubenmuttern aufgedreht.

Von vielen Abnehmern wird heute eine Befestigung einer Dachreling von oben her gefordert, um im Falle einer Reparatur bzw. von Nachlackierungsarbeiten am Fahrzeugdach, die Dachreling ohne den aufwendigen Ausbau des Fahrzeughimmels, Holmverkleidungen usw. demontieren zu können. Insoweit ist es durch offenkundige Benutzung bekannt, Stehbolzen zu verwenden, die von oben in Aufnahmen im Fahrzeugdach verschraubt werden. Der obere Teil der Bolzen, der aus dem Dach herausragt, dient dabei als Aufnahme für den Stützfuß. Mittels einer Befestigungsschraube wird der Stützfuß am Stehbolzen montiert. Eine andere Befestigung von oben sieht vor, Befestigungsschrauben von oben durch den Stützfuß im Fahrzeugdach zu führen und danach die Löcher im Stützfuß mittels Kappen abzudecken. Auch ist es bekannt, eine Befestigung der Stützfüße mittels am Fahrzeugdach angeschraubter Adapter vorzunehmen. Ein Stützfuß für ein Relingrohr gemäß dem Oberbegriff des Anspruchs 1 ist z.B. aus DE-A-4 004 829 bekannt.

Alle genannten Befestigungsarten haben den Nachteil, daß ein Ausgleich der, bei der Reling und der im Fahrzeugdach befindlichen Befestigungspositionen auftretenden Toleranzen nur unter Einschränkungen möglich ist. So ist bei der Montage der Adapter am Fahrzeugdach das genaue Abstandsmaß für die Zapfen, die zur Aufnahme der Dachreling dienen, über eine Lehre oder Schablone einzustellen. Des weiteren erfolgte bisher der Toleranzausgleich über Langlöcher in den Stützen, oder der Zapfen des Stützfußes ist im Galeriestab verschiebbar. Alle diese Möglichkeiten des Toleranzausgleichs führen entweder zu einem erhöhten Montageaufwand, zur optischen Beeinträchtigung der Reling und/oder Geräuschentwicklung der Dachreling im Fahrbetrieb.

Der vorliegenden Erfindung liegt nun die Aufgabe zugrunde, einen Stützfuß so zu gestalten, daß eine Dachreling in einfacher Weise von oben her montiert werden kann und daß dabei gleichzeitig Toleranzen ausgeglichen werden können.

Diese Aufgabe wird durch die im Patentanspruch 1 angegebenen Mißnahmen erfindungsgemäß gelöst.

Durch die Erfindung werden die Nachteile bzw. Beeinträchtigungen der herkömmlichen Systeme verhindert. Des weiteren werden die Kundenwünsche einer Montage bzw. Demontage der Dachreling außerhalb des Fahrzeuges erfüllt. Ebenso besteht die Möglichkeit jederzeit ein Fahrzeug mit einer Dachreling nachzurüsten. Der Ausgleich von Längentoleranzen erfolgt mittels einer beweglichen Gewindeplatte im Adapter. Beim Aufsetzen der Dachreling, wird durch einen im Stützfuß befindlichen Nocken, der in die Nut der Gewindeplatte gleitet, diese so verschoben, daß die Bohrung im Stützfuß und in der Gewindeplatte übereinstimmen. Hierdurch ist im Stützfuß kein Langloch, welches die Festigkeit der Schraubverbindung beeinträchtigt erforderlich. Bei einer normalen Senkung ist die Flächenpreßung im Bereich des Schraubenkopfes geringer als bei einem Langloch, d. h. beim gleichen Wert für die Flächenpreßung muß das Langloch erheblich größer dimensioniert werden. Dies beeinträchtigt erheblich das optische Erscheinungsbild des Stützfußes. Durch Entfall des Langloches im Stützfuß, entsteht im Bereich des Schraubenschaftes, der Befestigungsschraube Stütze Adapter eine form- und kraftschlüssige Verbindung, wodurch ein Verschieben der Stütze bei extremer horizontaler Belastung verhindert wird. Des weiteren ist die Gewindeausreißfestigkeit bei einer Gewindeplatte aus Stahl höher, als bei einem herkömmlichen Adapter aus Druckguß. Gewindeeinsätze, z.B. Heli Coil sind nicht notwendig. Ein Einstellen des Abstandsmaßes, zwischen den Zapfen der Adapter, vor der Montage der Reling entfällt. Daher brauchen die Bohrungen für die Aufnahme der Befestigungsschrauben am Fahrzeug nicht als Langloch ausgeführt zu werden. Für den Kunden ergibt sich hieraus eine Montageerleichterung beim Anbau der Reling am Fahrzeug.

Ein Ausführungsbeispiel der Erfindung wird im folgenden anhand der Zeichnung näher erläutert, und es zeigen:
- Fig. 1: einen Längsschnitt durch den Stützfuß nebst Adapter in einer Zwischenmontagestellung etwa folgend der Linie I-I in Fig. 3,
- Fig. 2: den Schnitt wie in Fig. 1 in Fertigmontagestellung und
- Fig. 3: einen Schnitt durch den Stützfuß nebst Adapter etwa folgend der Linie III-III in Fig. 2.

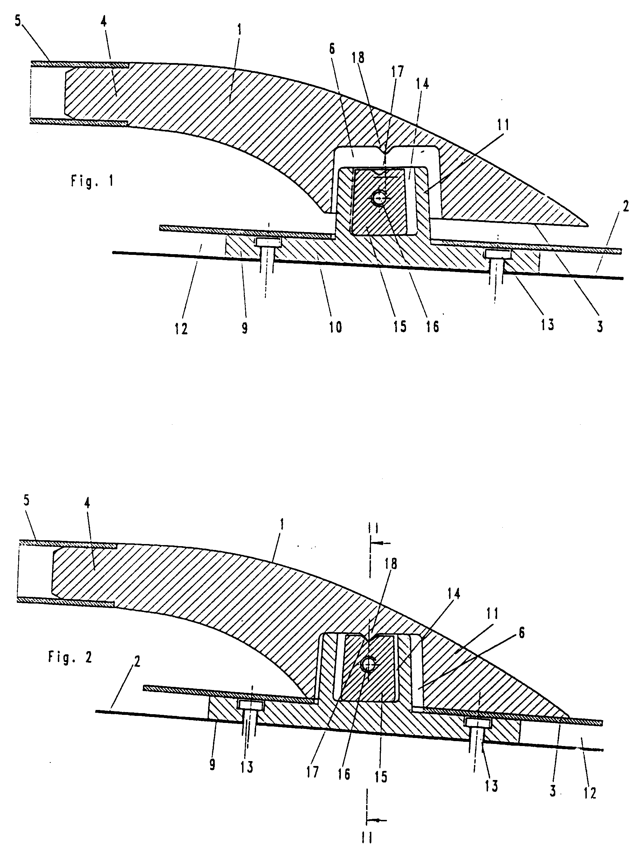

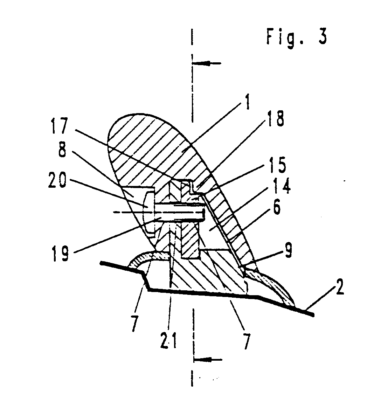

Der Stützfuß 1, der z.B. als Druckgußteil ausgebildet ist, weist eine sich auf dem Dachblech 2 eines nicht näher dargestellten Kraftfahrzeugs abstützende Auflagefläche 3 auf. Von der Auflagefläche 3 höhen- und seitenbeabstandet ist am Stützfuß 1 ein Steckzapfen 4 zum Herstellen einer Steckverbindung mit einem lediglich strichpunktiert angedeuteten Relingrohr 5 angeformt. Der Stützfuß 1 weist ferner eine sich von der Auflagefläche 3 ins Innere hinein erstreckende längliche Hohlkammer 6 und eine von einer Seite des Stützfußes her in die Hohlkammer 6 einmündende Bohrung 7 mit einer Bohrungserweiterung 8 auf.

Zur Befestigung des Stützfußes 1 auf dem Dachblech 2 ist ein Adapter 9 vorgesehen, der eine Grundplatte 10 und einen Dom 11 umfaßt. Die Grundplatte 10 des Adapters 9 ist auf dem Fahrzeugdach 2 oder in einem darin ausgebildeten Längskanal 12 mittels Schrauben 13 befestigt. Der Dom 11 des Adapters 9, der mit erheblichem Spiel in die Hohlkammer 6 des Stützfußes 1 eingreift, weist seinerseits eine Aussparung 14 auf, die zur Aufnahme einer gegenüber dieser kürzeren und innerhalb der Aussparung 14 längsverschiebbaren Gewindeplatte 15 mit einer Gewindebohrung 16 dient. Die Gewindeplatte 15 ist kopfseitig mit einer V-förmigen Nut 17 zum Herstellen einer formschlüssigen Verbindung mit einem an der oberen Hohlkammerwandung des Stützfußes 1 ausgebildeten keilförmigen Nockens 18 versehen. Beim Aufsetzen des Stützfußes 1 auf den Adapter 9 zwingt der in die Nut 17 eingleitende Nocken 18 die Gewindeplatte 15 zu einer Längsverschiebung innerhalb der Aussparung 14 bis der Nocken 18 in die Nut paßt, in welcher Stellung die Bohrung 9 und die Gewindebohrung 16 miteinander fluchten. Mittels einer in die Gewindebohrung 16 einschraubbaren Befestigungsschraube 19, deren Kopf 20 in der Bohrungserweiterung 8 eine versenkte Anordnung findet, kann danach die Gewindeplatte 15 und damit der Stützfuß 1 gegen den Adapter 9 verspannt werden. Im Adapter 9 befindet sich zum Durchlaß der Befestigungsschraube 19 eine Öffnung 21.

## Patentansprüche

1. Stützfuß (1) für ein Relingrohr (5) einer auf dem Kraftfahrzeug anzuordnenden Dachreling mit einer sich auf dem Dach (2) abstützenden Auflagefläche (3), einem von dieser höhen- und seitenbeabstandeten Steckzapfen (4) zum Herstellen einer Steckverbindung zwischen einem Relingrohrende und dem Stützfuß (1), gekennzeichnet durch eine sich in den Stützfuß (1) von der Auflagefläche (3) her erstreckende Hohlkammer (6), in die der Dom (11) eines am Fahrzeugdach (2) befestigten Adapters (9) eingreift, welcher eine Aussparung (14) zur Aufnahme einer gegenüber dieser kürzeren und innerhalb der Aussparung (14) längsverschiebbaren Gewindeplatte (15) aufweist, die mit einer kopfseitigen Nut (17) zum Herstellen einer formschlüssigen Verbindung mit einem an der oberen Hohlkammerwandung des Stützfußes (1) ausgebildeten Nockens (18) versehen ist, wobei der Stützfuß (1) mittels einer sich etwa parallel zu seiner Auflagefläche (3) ausgerichteten Befestigungsschraube (19), die eine in der Hohlkammer (6) mündende Bohrung (7) im Stützfuß (1) eine langlochartige Öffnung (21) im Dom (11) des Adapters (9) und eine Gewindebohrung (16) in der Gewindeplatte (15) durchsetzt, am Adapter (9) festlegbar ist.

2. Stützfuß nach Anspruch 1, dadurch gekennzeichnet, daß die Nut (17) in der Gewindeplatte (15) parallel zur Befestigungsschraube (19) verläuft und V-förmig ausgebildet ist und daß der in die Nut (17) eingreifende Nocken (18) eine in die Nut (17) passende Ausbildung aufweist.

## Claims

1. Support bracket (1) for a railing tube (5) of a roof railing to be situated on a motor vehicle featuring a contact surface (3) resting on the roof (2), a spigot (4) at a vertical and lateral distance from the contact surface, forming a socket-like connection between an end of the railing tube and the support bracket (1), characterized by a hollow chamber (6) extending from the contact surface (3) inside the support bracket (1), into which projects the vertical tongue (11) of an adapter (9) attached to the vehicle roof, this tongue exhibiting a notch (14) to accept a threaded plate (15) shorter than the notch (14) and longitudinally shiftable within the notch (14), the top of this plate being provided with a groove (17) to create a positive-fit connection with a cam (18) on the upper hollow chamber wall of the support bracket (1), wherein the support bracket (1) can be secured on the adapter (9) by means of a fixing screw (19) aligned approximately parallel with the contact surface (3), this screw passing through a hole (7) which intersects the hollow chamber (6) in the bracket (1), a hole-like opening (21) in the vertical tongue (11) of the adapter (9) and a threaded hole (16) in the threaded plate (15).

2. Support bracket in accordance with Claim 1, characterized by the groove (17) in the threaded plate (15) running parallel to the fixing screw (19) and being vee-shaped and by the cam (18) engaging with the groove (17) exhibiting a shape mating with the groove (17).

## Revendications

1. Pied d'appui (1) d'un tube (5) d'une barre de toit à disposer sur un véhicule, comportant une surface de portée (3) s'appuyant sur le toit (2) et un embout (4) déporté verticalement et latéralement en vue d'établir une liaison par emmanchement entre une extrémité du tube et le pied d'appui (1), caractérisé par une cavité (6) qui s'étend de la surface de portée (3) à l'intérieur du pied d'appui (1) et dans laquelle s'engage le dôme (11) d'un adaptateur (9) fixé au toit du véhicule (2), ledit dôme (11) présentant une échancrure (14) destinée à recevoir une plaquette taraudée (15) plus courte que ce dernier, susceptible de coulisser longitudinalement dans l'échancrure (14) et dotée du côté de sa tête d'une rainure (17) destinée à établir une liaison positive avec une came (18) élaborée au niveau de la paroi supérieure de la cavité du pied d'appui (1), le pied d'appui (1) étant assujettissable à l'adaptateur (9) au moyen d'un vis de fixation (19) approximativement parallèle à sa surface de portée (3) et traversant un trou pratiqué dans le pied d'appui (1) et débouchant dans la cavité (6), une ouverture oblongue pratiquée dans le dôme (11) de l'adaptateur (9) et un trou taraudé (16) pratiqué dans la plaquette (15).

2. Pied d'appui selon la revendication 1, caractérisé en ce que la rainure (17) ménagée dans la plaquette taraudée (15) est parallèle à la vis de fixation (19) et en forme de V et en ce que la came (18) s'engageant dans la rainure (17) présente une forme épousant celle de la rainure (17).
